(19) Europäisches Patentamt
European Patent Office
Office européen des brevets

(11) EP 1 069 129 A2

(12) EUROPEAN PATENT APPLICATION

(43) Date of publication:
**17.01.2001 Bulletin 2001/03**

(51) Int. Cl.[7]: **C07F 7/21**, C08L 83/04

(21) Application number: **00114477.3**

(22) Date of filing: **06.07.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **16.07.1999 US 354675**
**20.08.1999 US 378058**
**20.08.1999 US 378618**

(71) Applicant:
**DOW CORNING CORPORATION**
**Midland Michigan 48686-0994 (US)**

(72) Inventors:
- **Halloran, Daniel Joseph**
**Midland, Michigan 48642 (US)**
- **Zimmerman, Bret Lee**
**Birch Run, Michigan 48415 (US)**

(74) Representative:
**Sternagel, Fleischer, Godemeyer & Partner**
**Patentanwälte**
**Braunsberger Feld 29**
**51429 Bergisch Gladbach (DE)**

(54) **Organofunctional cocyclic siloxanes**

(57) Organofunctional cocyclic siloxanes are disclosed of the formula

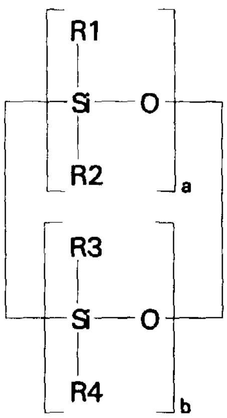

where R1 to R3 are alkyl groups of 1-6 carbon atoms; a and b have a value of 1-10; and R4 is an aminoalkyl group or a carboxyalkyl group. Some representative R4 groups are $-CH_2CH_2CH_2NH_2$, $-CH_2CH_2CH_2NHCH_2CH_2NH_2$, $-CH_2CH(CH_3)CH_2NHCH_2CH_2NH_2$ and $-(CH_2)_{10}COOH$ useful to prepare copolymeric and terpolymeric siloxanes via bulk polymerization, emulsion polymerization or microemulsion polymerization techniques.

EP 1 069 129 A2

## Description

Our invention provides new organofunctional cocyclic siloxanes selected from (i) dialkyl, alkyl aminoalkyl cocyclic siloxanes and (ii) a dialkyl alkyl carboxyalkyl cocyclic siloxanes. These compositions are prepared by hydrosilation and are useful as oligomers in the preparation of other siloxane polymers preferably by bulk emulsion or microemulsion polymerization methods.

While cocyclic siloxanes are generally known in the prior art, the organofunctional cocyclic siloxanes of the present invention are not believed to be described in the literature.

For example, US Patent 3,299,112 relates to certain dimethyl methyl polyether cocyclic siloxanes; US Patent 5,160,494 relates to certain dimethyl methyl higher alkylmethyl cocyclic siloxanes and US Patent 5,395,955 relates to certain dimethyl methyl carbinol cocyclic siloxanes. In addition, US Patents 5,160,494 and 5,395,955 also describe certain dimethyl methyl hydrogen cocyclic siloxanes. However, none of these patents describe either the (i) dialkyl, alkyl aminoalkyl cocyclic siloxane, or (ii) the dialkyl, alkyl carboxyalkyl cocyclic siloxane, of this invention.

Our invention provides compositions which in one embodiment, is a cocyclic siloxane having the formula

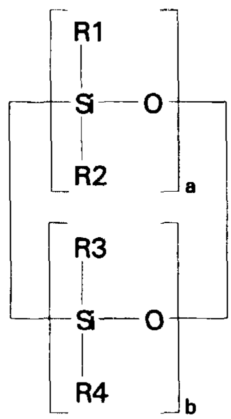

where R1 to R3 are each an alkyl group containing 1-6 carbon atoms; a and b are each a positive integer having a value of 1-10; and R4 is an aminoalkyl group having the formula

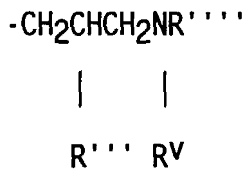

where R''' and R'''' are each hydrogen atoms or an alkyl group containing 1-4 carbon atoms, $R^V$ is a hydrogen atom or a group having the formula

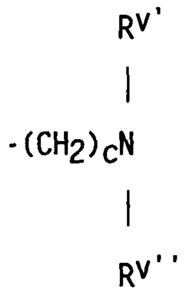

where c is a positive integer having a value of 2 or 3, and $R^{V'}$ and $R^{V''}$ are hydrogen atoms or an alkyl group containing 1-4 carbon atoms.

Alkyl groups represented by R1 R2, R3, R''', R'''', $R^{v'}$ and $R^{v''}$ include methyl, ethyl, propyl, isopropyl, butyl and isobutyl.

In this first embodiment, the R4 aminoalkyl groups most preferred are $-CH_2CH_2CH_2NH_2$, $-CH_2CH_2CH_2NHCH_2CH_2NH_2$ and $-CH_2CH(CH_3)CH_2NHCH_2CH_2NH_2$.

In another embodiment, the invention relates to a composition of matter which is a cocyclic siloxane having the formula

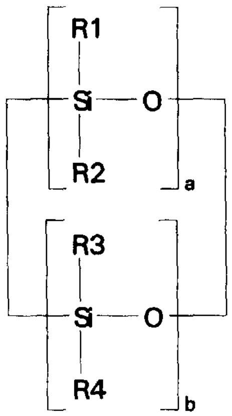

where R1 to R3 are each an alkyl group containing 1-6 carbon atoms; R4 is a carboxyalkyl or carboxyalkyl derivative group having the formula $-(CHR8)_nCOOR9$ where R8 is a hydrogen atom or an alkyl group containing 1-6 carbon atoms; R9 is a hydrogen atom, an alkyl group containing 1-6 carbon atoms, or a trialkylsilyl group $-Si(R10)_3$ in which R10 is an alkyl group containing 1-6 carbon atoms; a and b are each a positive integer having a value of 1-10; and n is a positive integer having a value of 3-20.

Hydrosilation involves the addition of a silicon hydride to an unsaturated hydrocarbon to form a silicon-carbon bond. It is used commercially to synthesize organofunctional silicon monomers, to crosslink silicone polymers, and to connect a silicone to an organic polymer block to form a copolymer. One example is the hydrosilation of an alpha-olefin with a methylhydrogen siloxane, according to the reaction:

$$\equiv SiH + CH_2{=}CH\text{-}R + \text{catalyst} \rightarrow \equiv SiCH_2CH_2\text{-}R.$$

When used for crosslinking, such platinum catalyzed hydrosilation reactions typically involve reaction between a low molecular weight polysiloxane containing several =Si-H groups and a high molecular weight polysiloxane containing several =Si-vinyl groups, or vice versa.

Generally, stoichiometric amounts of the ≡SiH containing reactant, and the reactant containing unsaturation, should be employed in the process. It may be necessary, however, to use an excess of the reactant containing unsaturation to totally consume the ≡SiH in the siloxane product.

The maximum amount of platinum catalyst employed is determined by economical considerations, and the minimum amount is determined by the type and purity of the reactants employed. Generally, very low concentrations of platinum catalyst, such as $1 \times 10^{-10}$ moles catalyst per equivalent of the reactant containing unsaturation, may be used when the reactants are extremely pure. However, it is possible to use $1 \times 10^{-8}$ moles catalyst per equivalent weight of reactant containing unsaturation, and even $1 \times 10^{-7}$ to $1 \times 10^{-3}$ moles platinum catalyst per equivalent weight of reactant containing unsaturation.

Moles of platinum catalyst are measured in terms of one mole providing one unit atom (e.g. one gram atom) of platinum. An equivalent weight of reactant containing unsaturation is the amount of reactant furnishing one unit weight of ethylenic unsaturation (i.e. equivalent to one unit weight of ≡SiH), regardless of what other reactive or potentially reactive substitutents may be present. Thus, an equivalent weight of ethylene is its molecular weight.

According to this invention, the platinum catalyst should be present in an amount sufficient to provide from 100 to 200 parts by weight of platinum per one million parts by weight of the reaction mixture, i.e., 100-200 ppm.

Hydrosilation reactions involving the addition of a silicon hydride to an unsaturated hydrocarbon such as an unsaturated amine to form a silicon-carbon bond are believed not to be feasible, due to platinum contamination by polar groups such as the amine. We have found unexpectedly that according to this invention, these reactions can be made to proceed readily when greater than 100 ppm platinum is used.

The reaction temperature can vary, and optimum temperatures depend upon the concentration of platinum

catalyst and the nature of the reactants. The reaction can be initiated at a temperature below room temperature, i.e., 0°C. to -10°C., and is exothermic. The temperature should be such that the reactants are in a liquid or gaseous state. The maximum temperature is determined by the stability of the reactants.

Ordinarily, it is best to keep the reaction temperature below 300°C. Best results with most reactants are obtained by initiating the reaction at 80-180°C., and maintaining the reaction within reasonable limits of this range. The exothermic nature of the reaction may elevate the temperature to 200-250°C. for a short time, however.

The optimum reaction time is a variable depending upon the reactants, reaction temperature and platinum catalyst concentration. Ordinarily, there is no benefit in extending the contact time of the reactants beyond 16 or 17 hours, but likewise there is usually no harm, unless an extremely elevated temperature is employed. With many reactants, a practical quantitative yield of product can be obtained in 30 minutes or less.

The reaction can be carried out at atmospheric, sub-atmospheric, or super-atmospheric pressure. The choice of conditions depends upon the nature of the reactants, and the equipment available. Non-volatile reactants are especially adaptable to being heated at atmospheric pressure with or without a reflux arrangement. Reactants which are gaseous at ordinary temperatures are preferably reacted at substantially constant volume under autogenous or induced pressure. The best results are obtained by maintaining all reactants in the liquid phase.

As noted above, hydrosilation requires a catalyst to effect the reaction between the =SiH containing reactant and the reactant containing unsaturation. Suitable catalysts are Group VIII transition metals. Some examples of metal catalysts which can be used are a platinum catalyst in the form of the reaction product of chloroplatinic acid and an organosilicon compound containing terminal aliphatic unsaturation, as described in US Patent 3,419,593. Another suitable catalyst is Karstedt's catalyst as described in US Patents 3,715,334 and 3,814,730, which is a platinum-vinylsiloxane substantially free of chemically combined halogen. Several types of catalysts, including deposited platinum type catalysts as well as complexed platinum type catalysts, are described in detail in US Patent 3,923,705. Yet another suitable catalyst is a platinum-organosiloxane complex prepared by reacting a platinous halide with an organosiloxane having 2-4 silicon bonded organic groups containing terminal olefinic unsaturation, in the presence of a polar organic liquid which is a partial solvent for the platinous halide, as described in US Patent 5,175,325. Still another suitable hydrosilation catalyst is platinum supported on active carbon particles of a diameter of 1-2 mm, in which the amount of platinum supported on the active carbon varies from 0.1-5 percent by weight, based on the weight of the active carbon.

Among such catalysts, the catalyst most preferred according to this invention is the neutralized complex of platinous chloride and divinyltetramethyldi-siloxane described in US Patent 5,175,325.

The ≡SiH containing reactant according to the present invention is a cocyclic siloxane having the formula

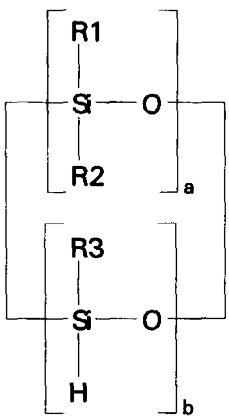

where R1 to R3 are each an alkyl group containing 1-6 carbon atoms, and a and b are each a positive integer having a value of 1-10. Alkyl groups generally representative of R1, R2 and R3 include methyl, ethyl, propyl, isopropyl, butyl, isobutyl, pentyl and hexyl.

Such ≡SiH containing cocyclic siloxanes and methods for their preparation are known in the art and reference may be had, for example, to US Patents 5,160,494 and 5,395,955.

The ≡SiH containing reactant most preferred according to the present invention is a cocyclic siloxane having the formula

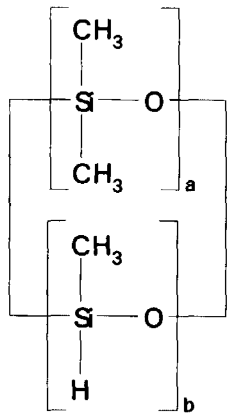

where a has an average value of 4 and b has an average value of one.

The reactant containing unsaturation which is used to prepare the dialkyl, alkyl methyl aminoalkyl cocyclic siloxane by hydrosilation is an unsaturated amine having the formula

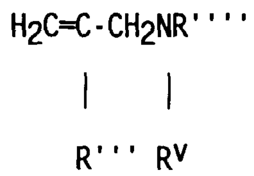

where R''' and R'''' are hydrogen atoms or an alkyl group containing 1-4 carbon atoms; $R^V$ is a hydrogen atom or a group having the formula

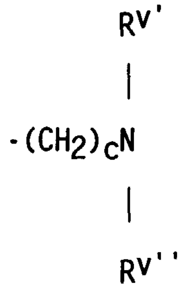

in which c is a positive integer having a value of 2 or 3, and $R^{V'}$ and $R^{V''}$ are hydrogen atoms or an alkyl group containing 1-4 carbon atoms.

Some representative unsaturated amines most preferred for use herein are allyl amine $H_2C=CHCH_2NH_2$, the compound $H_2C=CHCH_2NHCH_2CH_2NH_2$ or the compound $H_2C=C(CH_3)CH_2NHCH_2CH_2NH_2$.

The reactant containing unsaturation which is used to prepare the dialkyl, alkyl carboxyalkyl cocyclic siloxane by hydrosilation is an alkenoic acid, preferably an alkenoic acid which has a melting point of 40°C. or less. Some examples of suitable alkenoic acids which can be used are 3-butenoic acid (vinylacetic acid) $H_2C=CHCH_2COOH$, 4-pentenoic acid (allylacetic acid) $H_2C=CH(CH_2)_2COOH$, trans-2-pentenoic acid $C_2H_5CH=CHCOOH$, trans-3-hexenoic acid $C_2H_5CH=CHCH_2COOH$, 6-heptenoic acid $H_2C=CH(CH_2)_4COOH$ and 10-undecenoic acid (undecylenic acid) $H_2C=CH(CH_2)_8COOH$.

If desired, the alkenoic acid can be used in the hydrosilation reaction in an esterified form. Alternatively, and optionally, the alkenoic acid can be protected/silylated. Thus, it may be desirable to protect the hydroxyl group -OH of the alkenoic acid in order to prevent undesired reactions during reactions on other parts of the molecule in the hydrosilation reaction. Following hydrosilation, the protecting group can be removed.

A number of reagents have been developed for protecting and for removing such groups. For example, trimethylsilyl protecting groups, i.e., $(CH_3)_3Si$-, can be provided by reaction of the alkenoic acid with a silylating reagent such as hexamethyldisilazane, i.e., $(CH_3)_3SiNHSi(CH_3)_3$, or trimethylchlorosilane, i.e., $(CH_3)_3SiCl$.

Following the main hydrosilation reaction, the trimethylsilyl protecting group can be removed by contacting the product of hydrosilation with a desilylating reagent such as an alcohol, typically, an alcohol such as methanol, ethanol or isopropanol. These protecting/deprotecting steps may require the presence of a solvent, among which can be used aromatic hydrocarbons such as toluene, benzene, and xylene, or ethers such as diethyl ether and tetrahydrofuran. The solvent and any reaction product formed during these optional protecting/deprotecting steps can be removed in order to obtain the desired product.

In view of the above, the reactant containing unsaturation can be best described as an alkenoic acid or an alkenoic acid derivative having the general formula $(H_2C)_m=CR8(CR8_2)_nCOOR9$ where R8 is a hydrogen atom or an alkyl group containing 1-6 carbon atoms; R9 is a hydrogen atom, an alkyl group containing 1-6 carbon atoms, or a trialkylsilyl group $-Si(R10)_3$ where R10 is an alkyl group containing 1-6 carbon atoms; m is a positive integer having a value of 1-3; and n is a positive integer having a value of 1-20.

This invention is further directed to the polymerization of the organofunctional cocyclic siloxane of the present invention. In a first embodiment, the organofunktional cocyclic siloxane is polymerized using a bulk polymerization technique. In a second embodiment, the organofunktional cocyclic siloxane is polymerized using an emulsion polymerization technique. In a third embodiment, the organofunktional cocyclic siloxane is polymerized using a microemulsion polymerization technique.

The organofunctional cocyclic siloxane of the present invention, is used to prepare copolymeric siloxane fluids, copolymeric siloxane gums, and terpolymeric siloxanes, according to the three polymerization techniques.

In bulk polymerization techniques for the preparation of aminoalkylpolysiloxanes, it is not uncommon to employ an aminoalkyl siloxane polymer or an aminoalkyl trialkoxysilane as a precursor. However, aminoalkyl siloxane polymers are generally quite viscous and very sticky materials, and these properties make it difficult to pump the aminoalkyl siloxane polymer through existing equipment, and make it difficult to disperse the aminoalkyl siloxane polymer in the reaction medium. While aminoalkyl trialkoxysilanes generally disperse well in the reaction medium, they liberate significant amounts of an alcohol as a by-product.

In contrast, and according to the present invention, the dialkyl, alkyl aminoalkyl cocyclic siloxane is (i) low in viscosity, (ii) nonsticky, (iii) easy to pump through existing equipment, and (iv) it can be easily dispersed into the reaction medium. In addition, the dialkyl, alkyl aminoalkyl cocyclic siloxane liberates no by-products.

In bulk polymerization techniques for the preparation of carboxyalkylpolysiloxanes, it is not uncommon to react a vinyl functional siloxane with thioglycolic acid $HSCH_2COOH$, which reaction provides a sulfur containing carboxy functional polymer. However, the sulfur odor inherent in such materials precludes their widespread use. In contrast, and according to the present invention, a sulfur-free route to carboxyalkyl -polysiloxanes is provided.

In emulsion and microemulsion polymerization techniques for the preparation of aminoalkylpoly-siloxanes or carboxyalkylpoly-siloxanes, it is also not uncommon to employ an aminoalkyl trialkoxysilane or a carboxyalkyl trialkoxysilane respectively as one of the precursors in order to impart functionality to the siloxane polymer. However, aminoalkyl trialkoxysilanes or carboxyalkyl trialkoxysilanes typically have a considerable solubility in water, and therefore only partially incorporate into the siloxane polymer droplets formed during the ring opening polymerization reaction. As a consequence, one can only expect a low level of the organofunctional trialkoxysilane to become incorporated into the siloxane polymer. In addition, as noted above, the organofunktional trialkoxysilane generates a significant amount of alcohol as a by-product, most commonly methanol, according to the reaction:

$$RSi(OCH_3)_3 + 3H_2O \rightarrow RSi(OH)_3 + 3CH_3OH.$$

While methanol is not classified as carcinogenic, it can be acutely toxic if ingested, and may even be fatal or result in blindness. Methanol is a general irritant to the skin and mucous membranes, and prolonged skin contact with methanol vapor or liquid can cause dermatitis. Therefore, it would be advantageous in applications especially from personal use, to eliminate its presence.

In contrast, and according to the present invention, the incorporation of amine functionality or carboxy functionality into the siloxane polymer improves with the use of the organofunctional cocyclic siloxane of the present invention due to its increased nonpolarity and hence its decreased water solubility. In addition, the organofunctional cocyclic siloxane of the present invention liberates no by-product of any kind.

In a first embodiment, silicone copolymers and silicone terpolymers are prepared by bulk polymerization according to a method comprising heating a mixture of (i) an organofunctional cocyclic siloxane of the present invention; and optionally (ii) an alkylmethyl, dimethyl silicone cocyclic containing eight or more carbon atoms, in the presence of (iii) an catalyst, at a temperature and for a time sufficient to cause polymerization of (i) and optionally (ii) to the desired silicone copolymer and silicone terpolymer, respectively.

The mixture can further include (iv) a short chain linear silicone endblocker, and (v) a dimethyl cyclosiloxane. If the organofunctional cocyclic siloxane is an aminoalkyl functional cocyclic siloxane the catalyst (iii) is preferably an alkaline catalyst, more preferred an alkali-metal silanolate having the formula $R^a{}_wSi(OM)_{4-w}$ or an alkali metal siloxanolate having the formula $MO(R^a{}_2SiO)_nM$, in which $R^a$ represents an alkyl radical of 1-6 carbon atoms, an aryl radical, an alkenyl radical or an alkylamino radical; w is 0-3; and n is 2-20. If the organofunctional cocyclic siloxane is an carboxyl functional cocyclic siloxane the catalyst (iii) is preferably an acidic catalyst.

In a second embodiment, there is provided a method of emulsion polymerization in which the polymerization reaction involves opening of polysiloxane rings of a cyclic organosilicon precursor by

i) preparing a mixture comprising a cocyclic siloxane of the present invention, a surfactant and water;
ii) optionally, subjecting this mixture to high shear; and
iii) polymerizing this mixture in presence of an catalyst to form higher molecular weight polysiloxanes in the emulsion.

As in the first embodiment, the reaction mixture can further include the $C_8$ or more carbon atom containing alkylmethyl, dimethyl silicone cocyclic, the short chain linear silicone endblocker or a dimethyl cyclosiloxane.

The third embodiment is a method of making a thermodynamically stable, clear, single phase, silicone oil-in-water microemulsion, comprising the steps of

(i) forming a two-phase mixture comprising water, the cocyclic siloxane of the present invention, and a nonionic surfactant, a cationic surfactant, or an anionic surfactant;
(ii) adding to the two-phase mixture a co-surfactant selected from the group monohydroxy alcohols, diols and triols, until a thermodynamically stable, clear, single phase, pre-microemulsion containing the siloxane is formed;
(iii) adding a polymerization initiator to the thermodynamically stable, clear, single phase, pre-microemulsion;
(iv) heating the thermodynamically stable, clear, single phase, pre-microemulsion;
(v) agitating the heated, thermodynamically stable, clear, single phase, pre-microemulsion; and
(vi) allowing the siloxane to polymerize, until a thermodynamically stable, clear, single phase, microemulsion is formed containing a silicone polymer.

Preferably the cocyclic siloxane is added to a solution of the surfactant (S1) and water. A two-phase system containing the siloxane results. The two-phase system is then titrated with co-surfactant (S2) until a clear isotropic microemulsion results. An emulsion polymerization catalyst is added to the clear isotropic microemulsion, and polymerization of the cocyclic siloxane is initiated. The polymerization is allowed to advance until the reaction is complete, or a desired degree of polymerization (DP) has been obtained. Microemulsions of high molecular weight silicone polymers with low polydispersity can be produced.

As in the first and second embodiments, the reaction mixture can further include the $C_8$ or more carbon atom containing alkylmethyl, dimethyl silicone cocyclic, the short chain linear silicone endblocker or the dimethyl cyclosiloxane.

Copolymeric siloxane fluids, copolymeric siloxane gums, and terpolymeric siloxanes, are prepared by polymerizing an organofunctional cocyclic siloxane using a bulk polymerization technique, an emulsion polymerization technique, or a microemulsion polymerization technique.

The particularly preferred organofunctional cocyclic siloxane precursor used in the accompanying examples of this application had a structure generally corresponding to the formula

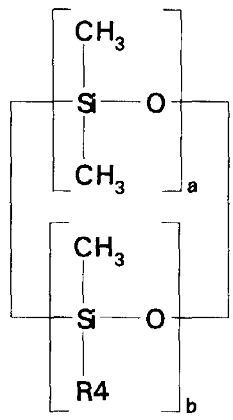

wherein R4 was the group $-CH_2CH_2CH_2NH_2$, b had a value of one, and a had values of 3 and 4, respectively or wherein R4 was the group $-(CH_2)_{10}COOH$, b had a value of one, and a had a value of 4.

In this embodiment, polymerization of the organofunctional cocyclic siloxane yielded (i) trialkylsiloxy terminated silicone copolymers containing dialkyl and aminoalkyl repeating units or carboxyalky repeating units respectively, and (ii) trialkylsiloxy terminated silicone terpolymers containing dialkyl, higher (C8+) alkylmethyl and aminoalkyl repeating units. These compositions corresponded generally to polymers of the formula:

$$R_3SiO\ (R_2SiO)_x(RR'SiO)_y(RR''SiO)_zSiR_3$$

wherein R is an alkyl group containing one to four carbon atoms, preferably methyl; Me represents a methyl group; R' is an alkyl group containing at least 8 carbon atoms; x and z each have a value of 1-1000; y has a value of 0-1000.

R'' is an aminoalkyl group represented by

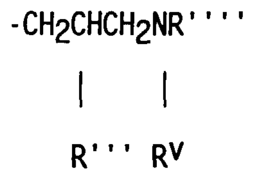

where R''' and R'''' are hydrogen or an alkyl group containing 1-4 carbon atoms: $R^V$ is hydrogen or the group represented by

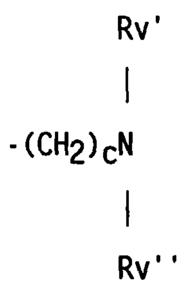

where c is 2 or 3, and Rv' and Rv'' are hydrogen or an alkyl group containing 1-4 carbon atoms or

R'' is a carboxyalkyl or carboxyalkyl derivative group having the formula $-(CHR8)_nCOOR9$ where R8 is hydrogen or an alkyl group containing 1-6 carbon atoms; R9 is hydrogen, an alkyl group containing 1-6 carbon atoms, or a trialkylsilyl group $-Si(R10)_3$ in which R10 is an alkyl group containing 1-6 carbon atoms: and n is a positive integer having a value of 3-20

Bulk polymerization processes of this type are described in detail in US Application 09/262,938, filed March

5, 1999 in the name of Daniel J. Halloran, entitled "Silicone Terpolymers Containing Dimethyl, Higher Alkyl, and Aminoalkyl Repeating Units. Such processes involve polymerizing and copolymerizing cyclic type siloxane species at elevated temperatures, in the presence of a catalyst, for a time sufficient to obtain the desired state of polymerization to polymers of essentially linear construction, i.e., the anionic ring opening polymerization mechanism.

In particular, the method of producing polymers according to this embodiment of the present invention involves heating a mixture of (i) the organofunctional cocyclic siloxane, and when terpolymers are desired, (ii) a $C_8$ or more carbon atom containing alkylmethyl, dimethyl silicone cocyclic, in the presence of (iii) a catalyst, at a temperature and for a time sufficient to cause copolymerization of (i) and (ii) to the desired silicone polymer. The mixture can include as optional ingredients (iv) a short chain linear silicone endblocker and (v) a dimethyl cyclosiloxane.

The $C_8$ or more carbon atom containing alkylmethyl, dimethyl silicone cocyclic (ii) to be copolymerized is a composition having a structure generally corresponding to the formula:

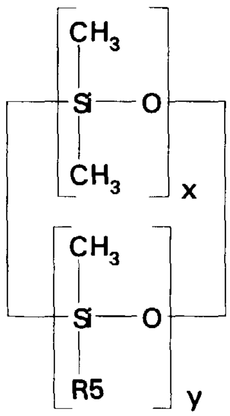

where x and y represent integers each having a value of 1-10, and R5 represents a higher carbon atom containing group such as $-(CH_2)_7CH_3$, $-(CH_2)_{11}CH_3$, or $-(CH_2)_{15}CH_3$. R5 may be a hydrocarbon group containing more than sixteen carbon atoms, if desired.

In case of aminoalkyl functional cocyclic siloxanes the alkaline catalyst (iii) can be an alkali-metal silanolate having the formula $R^a{}_wSi(OM)_{4-w}$ or an alkali metal siloxanolate of the formula $MO(R^a{}_2SiO)_nM$. In these formulas, $R^a$ represents an alkyl radical of 1-6 carbon atoms, an aryl radical, an alkenyl radical, or an alkylamino radical; w is 0-3; and n is 2-20.

Some examples of suitable alkyl and aryl radicals $R^a$ are methyl, ethyl and phenyl. Some examples of suitable alkenyl radicals $R^a$ are vinyl, allyl, propenyl and hexenyl. Some examples of suitable aminoalkyl radicals $R^a$ are aminopropyl and ethylene diaminopropyl. M represents an alkali metal in Group IA of the Periodic Table such as lithium, sodium, potassium, rubidium and cesium. Sodium and potassium are the preferred alkali metals, however.

Examples of some suitable alkali metal silanolates and alkali metal siloxanolates are sodium trimethylsilanolate $(CH_3)_3Si(ONa)$, sodium triphenylsilanolate $(C_6H_5)_3Si(ONa)$, disodium diphenylsilanolate $(C_6H_5)_2Si(ONa)_2$, disodium dimethylsilanolate $(CH_3)_2Si(ONa)_2$, disodium methylaminopropylsilanolate $(CH_3)[H_2NCH_2CH_2CH_2]Si(ONa)_2$, their potassium equivalents, dipotassium dimethylsilanolate $KO[(CH_3)_2SiO]K$, dipotassium dimethylsiloxanolate $KO[(CH_3)_2SiO]_nK$ where n is 4-8, dipotassium phenylmethylsilanolate $KO[(C_6H_5)(CH_3)SiO]K$, and dipotassium phenylmethylsiloxanolate $KO[(C_6H_5)(CH_3)SiO]_nK$ where n is 4-8.

The preferred catalyst is an alkali metal silanolate, and more particularly, dipotassium dimethylsilanolate as shown below:

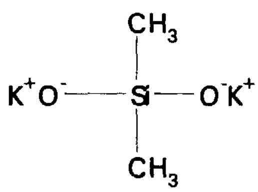

In case of carboxyalkyl functional cocyclic siloxanes the acid catalyst (iii) can be a mineral acid such as sulfuric acid or hydrochloric acid; an acid clay such as sulfuric acid activated montmorillonite clay: a Lewis acid such as ferric chloride $FeCl_3$, aluminum chloride $AlCl_3$, or boron trifluoride $BF_3$; an alkane sulfonic acid, i.e., $RSO_3H$, such as mixtures of methane, ethane, and propane sulfonic acids; or a perfluoroalkane sulfonic acid, i.e., $C_nF_{2n+1}SO_3H$ where n is generally 1-30, but preferably less than 20, such as trifluoromethane sulfonic acid (triflic acid $CF_3SO_3H$). Triflic acid is the preferred catalyst according to the present invention.

The optional short chain linear silicone endblocker (iv) is a composition of the type $MD_eM$, wherein "e" has a value of from 0 to 8; "M" represents monofunctional unit $(CH_3)_3SiO_{1/2}$; and "D" represents difunctional unit $(CH_3)_2SiO_{2/2}$. This fourth optional component can be any one or more of linear alkyl siloxanes such as hexamethyldisiloxane (MM) with a boiling point of 100°C., viscosity of 0.65 $mm^2/s$ and formula $Me_3SiOSiMe_3$; octamethyltrisiloxane (MDM) with a boiling point of 152°C., viscosity of 1.04 $mm^2/s$ and formula $Me_3SiOMe_2SiOSiMe_3$; decamethyltetrasiloxane ($MD_2M$) with a boiling point of 194°C., viscosity of 1.53 $mm^2/s$ and formula $Me_3SiO(Me_2SiO)_2SiMe_3$; dodecamethylpentasiloxane ($MD_3M$) with a boiling point of 229°C., viscosity of 2.06 $mm^2/s$ and formula $Me_3SiO(Me_2SiO)_3SiMe_3$; tetradecamethylhexasiloxane ($MD_4M$) with a boiling point of 245°C., viscosity of 2.63 $mm^2/s$ and formula $Me_3SiO(Me_2SiO)_4SiMe_3$; and hexadecamethylheptasiloxane ($MD_5M$) with a boiling point of 270°C., viscosity of 3.24 $mm^2/s$ and formula $Me_3SiO(Me_2SiO)_5SiMe_3$.

When the short chain linear silicone endblocker (iv) is included in the reaction mixture, its presence results in the formation of trialkylsiloxy endblocked silicone copolymers and silicone terpolymers, rather than silanol endblocked silicone copolymers and silicone terpolymers as would be the case in its absence.

The optional dimethyl cyclosiloxane (v) can be any one or more of cyclic alkyl siloxanes having the formula:

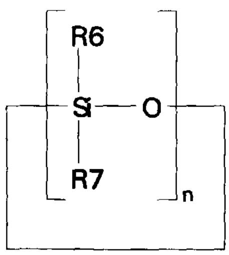

where n has a value of 3-6, and R6 and R7 each represent alkyl groups containing 1-6 carbon atoms. Representative compositions include hexamethylcyclotrisiloxane ($D_3$) a solid with a boiling point of 134°C. and formula $\{(Me_2)SiO\}_3$; octamethylcyclotetrasiloxane ($D_4$) with a boiling point of 176°C., viscosity of 2.3 $mm^2/s$ and formula $\{(Me_2)SiO\}_4$; decamethylcyclopentasiloxane ($D_5$) with a boiling point of 210°C., viscosity of 3.87 $mm^2/s$ and formula $\{(Me_2)SiO\}_5$; and dodecamethylcyclohexasiloxane ($D_6$) with a boiling point of 245°C., viscosity of 6.62 $mm^2/s$ and formula $\{(Me_2)SiO\}_6$. Its presence in the reaction medium merely provides an avenue enabling the use of lesser amounts of the essential components (i) and (ii).

The following examples are set forth in order to illustrate this invention in more detail. The temperature of any measurements is 25°C unless otherwise indicated. In these examples, the catalyst used in the preparation of the cocyclic siloxane of the present invention was a neutralized complex of platinous chloride and divinyltetramethyldisiloxane generally as described in US Patent 5,175,325. The ≡SiH containing reactant was a cocyclic siloxane having the formula

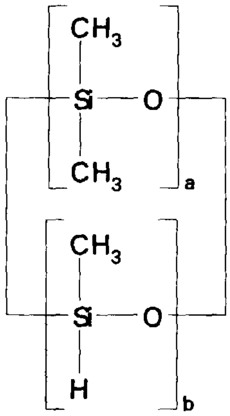

where a had an average value of 4 and b had an average value of one. The reactant containing unsaturation was allylamine or undecylenic acid.

Examples 1-3 - General Procedure

Into a reaction flask was placed the ≡SiH containing cocyclic siloxane and the platinum catalyst. The reaction flask was purged with nitrogen, and the allylamine was added dropwise to the flask to control the evolution of heat. After the addition, the reaction flask was heated to a temperature in the range of 80-100°C. Heating was continued, and the temperature of the reaction flask was maintained for 6-24 hours. The reaction flask was cooled to room temperature, and the level of any unreacted ≡SiH was measured using infrared spectroscopy. This determination was followed by analysis of the product of the hydrosilation reaction by means of gas chromatography and mass spectrometry. The various parameters of these examples are set forth in Table 1.

Table 1

| Examples 1 to 3 | | | |
|---|---|---|---|
| Parameter | Example 1 | Example 2 | Example 3 |
| Amount of ≡SiH Cocyclic Siloxane (gram) | 84.6 | 84.6 | 84.6 |
| Amount of Allylamine (gram) | 85.0 | 17.1 | 17.1 |
| Molar Ratio ≡SiH Cocyclic Siloxane/Allylamine | 1:5 | 1:1 | 1:1 |
| Parts per million Platinum | 200 | 200 | 200 |
| Reaction Time (hours) | 24 | 6 | 6 |
| Reaction Temperature (°C) | 100 | 80 | 80 |
| Results: Gas Chromatography/Mass Spectrometry | $D^{R4}D_3$ | $D^{R4}D_3$ and $D^{R4}D_4$ | $D^{R4}D_3$ and $D^{R4}D_4$ |
| Parts per million ≡SiH via Infrared Spectroscopy | 0 | 0 | 2.3 |

The products prepared by hydrosilation in Examples 1-3, i.e., $D^{R4}D_3$ and $D^{R4}D_4$, have the structure shown below wherein R4 was the group $-CH_2CH_2CH_2NH_2$, b had a value of one, and a had values of 3 and 4, respectively.

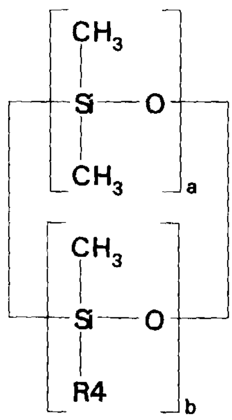

EXAMPLE 4A - Silylation/Protection of Undecylenic Acid

Into a reaction flask was placed 276.4 gram of undecylenic acid and 196.8 gram of toluene which was used as a solvent. The reaction flask was purged with nitrogen, and then 120.8 gram of hexamethyldisilazane which was used as the silylation reagent, was added dropwise to the flask. The reaction flask was heated to a temperature of 110°C. Heating was continued and the temperature of the reaction flask was maintained for 3 hours. The toluene solvent was removed by reducing the pressure in the reaction flask. The reaction flask containing the silylated alkenoic acid was cooled to room temperature, and the extent of the reaction to insure completion was determined by infrared spectroscopy. Analysis by gas chromatography, $C_{13}$ nuclear magnetic resonance (NMR), and mass spectrometry confirmed that the product was trimethylsilylundecylate, i.e., $H_2C=CH(CH_2)_8COOSi(CH_3)_3$.

EXAMPLE 4B - General Procedure

Into a reaction flask was placed 48.5 gram of trimethylsilylundecylate prepared in Example 4A and 50 parts per million of platinum catalyst. The reaction flask was purged with nitrogen, and then 85 gram of the ≡SiH containing cocyclic siloxane was added dropwise to the flask. The molar ratio of ≡SiH containing cocyclic siloxane to trimethylsilylundecylate was 1:1. The reaction flask was heated to a temperature of 110°C. Heating was continued, and the temperature of the reaction flask was maintained for 3 hours. The reaction flask was cooled to room temperature. The level of unreacted ≡SiH was measured using infrared spectroscopy, and determined to be zero parts per million residual ≡SiH. Analysis of the product by means of gas chromatography and mass spectrometry confirmed that a silylated dimethyl methyl carboxyfunctional cocyclic siloxane had been prepared.

EXAMPLE 4C - Preparation of Carboxyalkyl Cocyclic Siloxane/Removal of Protecting Group

Into a reaction flask were placed 90 gram of the silylated dimethyl methyl carboxyfunctional cocyclic siloxane prepared in Example 4B and 30 gram of methanol which was used as the desilylating reagent. The reaction flask was purged with nitrogen, and then the reaction flask was heated to a temperature of 110°C. Heating was continued, and the temperature of the reaction flask was maintained for 3 hours. The methanol desilylating reagent and by-product were removed by reducing the pressure in the heated reaction flask. The by-product was trimethylmethoxysilane, i.e., $(CH_3O)Si(CH_3)_3$, which was formed as a result of the reaction between the desilylating reagent and the silylated dimethyl methyl carboxyfunctional cocyclic siloxane. The reaction flask containing the desired product, i.e., the desilylated dimethyl methyl carboxyalkyl cocyclic siloxane, was cooled to room temperature. Analysis of the product by means of gas chromatography and mass spectrometry confirmed that it consisted of a mixture of $D^{R4}D_4$ and $D^{R4}D_5$, having the structure shown below, where R4 was the group $-(CH_2)_{10}COOH$, b had a value of one, and a had values of 4 and 5, respectively.

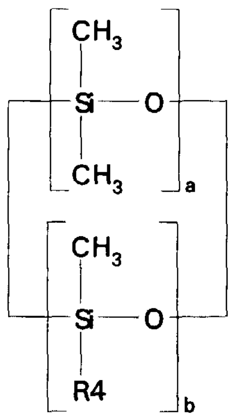

EXAMPLE 5 - Preparation of a Silicone Copolymer Fluid

In this example, a silicone copolymer was prepared having a structure generally corresponding to the formula:

$$Me_3SiO(Me_2SiO)_x(MeOctSiO)_y(MeSiO)_zSiMe_3$$

|

Q

wherein Me represents the methyl group, Oct represents the octyl group $CH_3(CH_2)_7$- and Q represents the group $-CH_2CH_2CH_2NHCH_2CH_2NH_2$. In this example, however, the value of y was zero. The degree of polymerization (DP) was 100, i.e., the value of x + z = 100 .

Into a reaction vessel, a mixture was formed by adding to the reaction vessel 45.26 grams of the dimethyl, methyl aminoalkyl cocyclic siloxane, 4.24 grams of a 5 centistoke ($mm^2/s$) polydimethylsiloxane as the short chain linear silicone endblocker and 0.13 gram of a potassium silanolate catalyst. The initial viscosity of this mixture before polymerization was measured and determined to be 8.1 centipoise ($mm^2/s$). The reaction vessel containing these ingredients was purged with nitrogen, and then heated to 100°C. for 5 hours. The reaction vessel was allowed to cool to less than 50°C. and then the contents of the reaction vessel were neutralized with acetic acid. Following neutralization, the contents of the reaction vessel were filtered. The final viscosity of the mixture after polymerization was measured and determined to be 282 centipoise ($mm^2/s$).

Example 6 - Preparation of a Silicone Copolymer Gum

Example 5 was repeated except that the silicone copolymer which was prepared had a degree of polymerization (DP) of 2,000. In addition, the amounts and the conditions used during the polymerization reaction were varied. Thus, the mixture was formed by adding to the reaction vessel 50.3 grams of the dimethyl, methyl aminoalkyl cocyclic siloxane and 0.13 gram of the potassium silanolate catalyst. The initial viscosity of the mixture was the same as Example 1, i.e., 8.1 centipoise ($mm^2/s$). However, the reaction vessel was only heated for 0.5 hour. The final viscosity of the mixture was 3,700 centipoise ($mm^2/s$).

Example 7 - Preparation of a Silicone Terpolymer Fluid

A silicone terpolymer was prepared having the formula:

$$Me_3SiO(Me_2SiO)_x(MeOctSiO)_y(Me\underset{\displaystyle Q}{\underset{|}{Si}}O)_zSiMe_3$$

wherein Me represents the methyl group, Oct represents the octyl group $CH_3(CH_2)_7$-, and Q represents the group -$CH_2CH_2CH_2NHCH_2CH_2NH_2$. The DP was 50, i.e., the value of x + y + z = 50 .

In this example, a mixture was formed by adding to a reaction vessel 7.4 grams of the dimethyl, methyl aminoalkyl cocyclic siloxane, 7.6 grams of a 5 centistoke ($mm^2/s$) polydimethylsiloxane as the short chain linear silicone endblocker, 35 grams of the $C_8$ carbon atom containing alkylmethyl, dimethyl silicone cocyclic and 0.13 gram of a potassium silanolate catalyst. The initial viscosity of the mixture was 6.9 centipoise ($mm^2/s$). The reaction vessel was purged with nitrogen and heated to 150°C. for 4 hours. The reaction vessel was cooled to less than 50°C. and then the contents were neutralized with acetic acid. Following neutralization, the contents were filtered. The final viscosity was 25.6 centipoise ($mm^2/s$). The non-volatile content of the mixture, i.e., the amount of the silicone terpolymer, was 88.9 percent.

Example 8 - Preparation of a Silicone Copolymer Fluid

In this example, a silicone copolymer was prepared having a structure generally corresponding to the formula:

$$Me_3SiO(Me_2SiO)_x(MeOctSiO)_y(Me\underset{\displaystyle Q}{\underset{|}{Si}}O)_zSiMe_3$$

wherein Me represents the methyl group, Oct represents the octyl group $CH_3(CH_2)_7$-, and Q represents the group -$(CH_2)_{10}COOH$. In this example, however, the value of y was zero. The degree of polymerization (DP) was 100, i.e., the value of x + z = 100 .

Into a reaction vessel, a mixture was formed by adding to the reaction vessel 30.0 grams of the dimethyl, methyl carboxyalkyl cocyclic siloxane, 2.8 grams of a 5 centistoke ($mm^2/s$) polydimethylsiloxane as the short chain linear silicone endblocker and 0.025 gram of trifluoromethane sulfonic acid catalyst. The initial viscosity of this mixture before polymerization was measured and determined to be 29.5 centipoise ($mm^2/s$). The reaction vessel containing these ingredients was purged with nitrogen, and then heated to 100°C. for 5 hours. The reaction vessel was allowed to cool to less than 50°C., and then the contents of the reaction vessel were neutralized with sodium hydroxide. Following neutralization, the contents of the reaction vessel were filtered. The final viscosity of the mixture after polymerization was measured and determined to be 1,240 centipoise ($mm^2/s$).

Example 9 - Preparation of a Silicone Copolymer Gum

Example 8 was repeated except that the amounts and the conditions used during the polymerization reaction were varied. Thus, the mixture was formed by adding to the reaction vessel 15.0 grams of the dimethyl, methyl carboxyalkyl cocyclic siloxane and 0.013 gram of the trifluoromethane sulfonic acid catalyst. The initial viscosity of the mixture was the same as Example 1, i.e., 29.5 centipoise ($mm^2/s$). However, the reaction vessel was only heated for 0.5 hour. The final viscosity of the mixture was 1,698,624 centipoise ($mm^2/s$). The silicone copolymer which was prepared in this example had a degree of polymerization (DP) of 3,400 which was an estimate based on its viscosity.

Example 10 - Preparation of a Silicone Terpolymer Fluid

A silicone terpolymer was prepared having the formula:

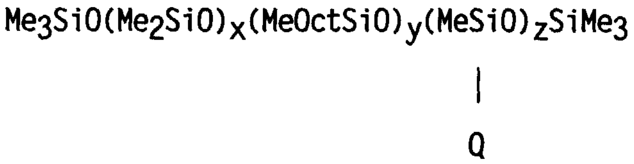

wherein Me represents the methyl group, Oct represents the octyl group $CH_3(CH_2)_7$-, and Q represents the group -$(CH_2)_{10}COOH$. The DP was 50, i.e., the value of $x + y + z = 50$ .

In this example, a mixture was formed by adding to a reaction vessel 9.8 grams of the dimethyl, methyl carboxyalkyl cocyclic siloxane, 7.2 grams of a 5 centistoke ($mm^2/s$) polydimethylsiloxane as the short chain linear silicone endblocker, 38.1 grams of the $C_8$ carbon atom containing alkylmethyl, dimethyl silicone cocyclic, and 0.013 gram of trifluoromethane sulfonic acid catalyst. The initial viscosity of the mixture was 6.9 centipoise ($mm^2/s$). The reaction vessel was purged with nitrogen, and heated to 80°C. for 4 hours. The reaction vessel was cooled to less than 50°C., and then the contents were neutralized with sodium hydroxide. Following neutralization, the contents were filtered. The final viscosity was 22.6 centipoise ($mm^2/s$). The non-volatile content of the mixture, i.e., the amount of the silicone terpolymer, was 90.2 percent.

In this embodiment, the polymerization of an organofunctional cocyclic siloxane yielded an emulsion containing a silanol endblocked silicone copolymer having dialkyl and aminoalkyl repeating units. An emulsion containing a silicone terpolymer having dialkyl, higher (C8+) alkylmethyl and aminoalkyl repeating units, can also be prepared according to this embodiment of the invention. The silicone copolymers and the silicone terpolymers in emulsions prepared according to this embodiment of the invention have a structure generally corresponding to formula:

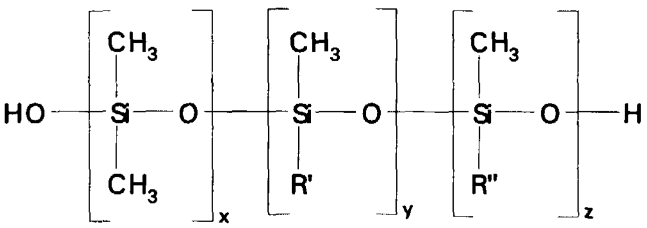

where x has a value of 1-2000; y has a value of 0-100; z has a value of 1-100; and R' and R" have the same meaning as defined above. As explained hereinafter, such polymers may be trialkylsiloxy endblocked instead of being silanol endblocked, if desired.

Emulsion polymerization processes are described in detail in US Application 09/349,359 filed July 8, 1999 in the name of Daniel J. Halloran and Judith M. Vincent, entitled "Emulsion Polymerization Using a Cocyclic Silicone".

Such processes involve the opening of cyclic polysiloxane rings using an anionic or a cationic catalyst in the presence of water. The anions and the cations act as a polymerization catalyst for such reactions by functioning to open the ring of the cyclic polysiloxane, and allowing it to form linear siloxane oligomers having terminal hydroxy groups. These oligomers then react with other oligomers by means of a condensation reaction, with the result that higher molecular weight polysiloxanes are formed. A surfactant(s) is used to stabilize the polysiloxane in the emulsion in the form of small sized droplets.

In particular, the method according to this embodiment of the invention results in oil-in-water emulsions containing the copolymers and terpolymers which are made by (i) combining and mixing together certain organosilicon precursors, one or more surfactants, and water; (ii) optionally subjecting the mixture prepared in Step (i) to high shear; (iii) adding a catalyst to the mixture; (iv) heating the reaction mixture to initiate polymerization of the precursors; (v) cooling and neutralizing the mixture; and (vi) recovering an oil-in-water emulsion containing the silicone copolymer or the silicone terpolymer.

The organosilicon precursors which are used in the process according to this embodiment of the invention include as the essential ingredient, (i) the organofunctional cocyclic siloxane, i.e., the dialkyl, alkyl aminoalkyl cocyclic siloxane. Optionally, the reaction mixture may also contain organosilicon precursors discussed above such as (ii) the $C_8$ or more carbon atom containing alkylmethyl, dimethyl silicone cocyclic, (iii) the short chain linear silicone endblocker and (iv) the dimethyl cyclosiloxane.

Silicone copolymers according to this embodiment can be prepared using only the organosilicon precursor (i), while the silicone terpolymers require the presence of at least organosilicon precursors (i) and (ii). Silicone copolymers can also be prepared using organosilicon precursors (i) and (iv), if desired. When the short chain linear silicone endblocker (iii) is included in the reaction mixture, its presence results in the formation of trialkylsiloxy endblocked silicone copolymers and silicone terpolymers, rather than silanol endblocked silicone copolymers and silicone terpolymers, as would be the case in its absence.

A catalyst and a surfactant(s) are required for the reaction to proceed and for forming an emulsion, and reference may be had to U.S. Application 09/349,359 for a detailed list of each of these components. However, it should be noted that certain acid catalysts such as dodecylbenzene sulfonic acid (DBSA) are capable of functioning as the acid catalyst as well as an anionic surfactant. When DBSA is used, therefore, it eliminates the need for using a separate acid catalyst and a separate anionic surfactant. Thus, DBSA will function as acid catalyst in the ring opening reaction, and then when the reaction is stopped and DBSA is neutralized, it has the characteristics of an anionic surfactant, i.e., sodium dodecylbenzene sulfonate, for purposes of forming the desired emulsion. In the accompanying example illustrative of this embodiment, DBSA was used as the catalyst, as well as the anionic the surfactant.

The method is carried out by creating a mixture of the ingredients containing the organosilicon precursors, ionic (cationic or anionic) surfactant, nonionic surfactant, water and catalyst. The mixture is heated with agitation at a polymerization reaction temperature until essentially all of the organosilicon precursors have reacted, and a stable, oil-free emulsion of polymer is formed.

The following examples are set forth in order to illustrate the further embodiment of this invention in more detail.

<u>Example 11 - Preparation of a Cationic Emulsion</u>

The following ingredients in the amounts indicated were used to prepare a cationic emulsion using the emulsion polymerization technique according to this embodiment of the invention:

| Ingredients | Weight - Grams |
|---|---|
| Water | 534.0 |
| ARQUAD T-27W (cationic surfactant)[1] | 88.0 |
| Octamethylcyclotetrasiloxane, i.e., $D_4$ | 345.8 |
| Organofunctional Cocyclic Siloxane | 4.2 |
| NaOH (50% solution) - catalyst | 0.5 |

[1] an N-alkyl trimethyl ammonium chloride available from Akzo Chemicals Inc., Chicago, Illinois

The first two of the ingredients were added to a flask and mixed at 300 rpm (31 rad/s) until the surfactant had been dissolved. The blend of organo-silicon precursors was added to the flask and mixed for 10 minutes. The mixture was homogenized in two passes at 7,500 psi (51,750 kPa) and 500 grams of homogenized mixture was added back to the flask after processing. The contents of the flask was heated to 80°C. The catalyst was added, and the flask was maintained at 80°C. for eight hours. The contents of the flask was then neutralized with acetic acid.

A silicone was extracted from the emulsion and determined to have a structure generally corresponding to the formula

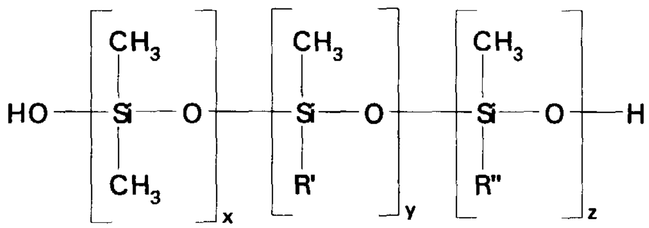

The silicone in Example 11 had the following characteristics.

| Characteristic | Value |
|---|---|
| Viscosity ($mm^2/s$) | 3,860 |
| X | 400 |
| Y | 0 |
| Z | 2 |
| R' | Not applicable, i.e., y = 0. |
| R'' | $-CH_2CH_2CH_2NHCH_2CH_2NH_2$ |

Example 12 - Preparation of an Anionic Emulsion

The following ingredients in the amounts indicated were used to prepare a cationic emulsion using the emulsion polymerization technique according to this embodiment of the invention:

| Ingredients | Weight - Grams |
|---|---|
| Water | 513.00 |
| DBSA (anionic surfactant & catalyst) | 15.25 |
| Octamethylcyclotetrasiloxane, i.e., $D_4$ | 384.00 |
| Organofunctional Cocyclic Siloxane | 4.90 |

The ingredients were added to a flask and mixed at 300 rpm (31 rad/s) for 10 minutes. The mixture was homogenized in two passes at 5,000 psi (34,450 kPa) and 500 grams of homogenized mixture was added back to the flask, after processing it with an additional amount of 8.3 grams of DBSA. The contents of the flask were heated to 80°C. and the flask was maintained at 80°C. for four hours. The temperature of the flask was lowered to 45°C. for two hours. The contents of the flask were then neutralized.

A silicone was extracted from the emulsion and determined to have a structure generally corresponding to the formula

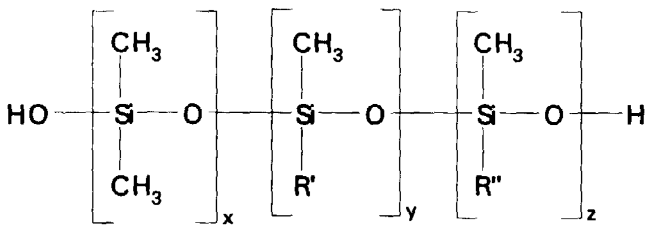

The silicone in Example 12 had the following characteristics.

| Characteristic | Value |
|---|---|
| Viscosity ($mm^2/s$) | 55,800 |

(continued)

| Characteristic | Value |
|---|---|
| x | 1,000 |
| y | 0 |
| z | 2 |
| R' | Not applicable, i.e., y = 0. |
| R" | $-(CH_2)_{10}COOH$ |

In this embodiment, the polymerization of an organofunctional cocyclic siloxane yielded a microemulsion containing a silanol endblocked silicone copolymer having dialkyl and aminoalkyl repeating units. A microemulsion containing a silicone terpolymer having dialkyl, higher (C8+) alkylmethyl and aminoalkyl repeating units, can also be prepared according to this embodiment of the invention. The silicone copolymers and the silicone terpolymers in microemulsions prepared according to this embodiment of the invention have a structure corresponding to formula:

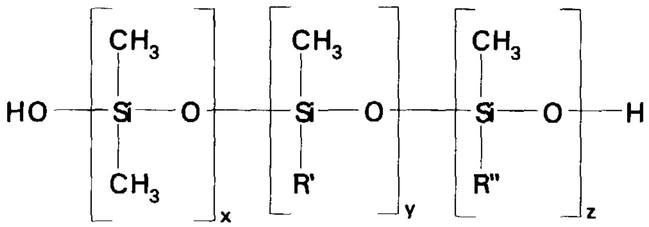

where x has a value of 1-2000; y has a value of 0-100: z has a value of 1-100; R' and R" have the same meaning as defined above. As explained above, such polymers may be trialkylsiloxy endblocked instead of being silanol endblocked, if desired.

Microemulsion polymerization processes of this type are described in detail in copending U.S. Application 09/227,838 filed January 11, 1999 in the name of Daniel J. Halloran entitled "Method of Preparing Silicone Oil-In-Water Microemulsion". Such processes, as explained in detail in the copending application, provide silicone oil-in-water microemulsions prepared via the following steps:

1. A primary surfactant is dissolved in water.
2. A siloxane is added, and a two-phase mixture is formed.
3. With simple mixing, a co-surfactant is slowly added to the two-phase mixture, until a clear isotropic microemulsion of a siloxane-in-water is formed. These systems typically can have a mean particle size of less than 20 nanometer, and a narrow particle size distribution.

Thus, siloxanes can, for example, be added to solutions containing ionic surfactants, such as dodecyltrimethyl ammonium bromide (DTAB) and sodium dodecyl sulfate (SDS), until a two-phase system is formed. A co-surfactant, such as 1-pentanol, is then titrated into the solution, until a clear, isotropic microemulsion results. Salts such as sodium chloride can also be included.

The system can be polymerized by the addition of, for example, a strong acid or a strong base ring-opening polymerization catalyst or a condensation polymerization catalyst. The use of such a thermodynamically stable pre-emulsion leads to a vastly simplified polymerization process. Some benefits, for example, include fast polymerization rates and high molecular weights. In some instances, a very low molecular weight polydispersity has been observed.

In particular, this embodiment provides a method of making a thermodynamically stable, clear, single phase, silicone oil-in-water microemulsion, by (i) forming a two-phase mixture obtained by combining water, a siloxane, and a nonionic surfactant, a cationic surfactant, or an anionic surfactant; (ii) adding to the two-phase mixture a co-surfactant selected from monohydroxy alcohols, diols and triols, until a thermodynamically stable, clear, single phase, pre-microemulsion containing the siloxane is formed; (iii) adding a polymerization initiator to the thermodynamically stable, clear, single phase, pre-microemulsion; (iv) heating the thermodynamically stable, clear, single phase, pre-microemulsion; (v) agitating the heated, thermodynamically stable, clear, single phase, pre-microemulsion; and (vi) allowing the siloxane to polymerize, until a thermodynamically stable, clear, single phase, microemulsion is formed containing a higher molecular weight silicone polymer.

The organosilicon precursors which are used in the process according to this embodiment of the invention include as the essential ingredient, (i) the organofunctional cocyclic siloxane, i.e., the dialkyl, alkyl aminoalkyl cocyclic siloxane or the dialkyl, alkyl carboxyalkyl cocyclic siloxane. Optionally, the reaction mixture may also contain organosilicon precursors discussed above such as (ii) the $C_8$ or more carbon atom containing alkylmethyl, dimethyl silicone cocyclic, (iii) the short chain linear silicone endblocker, and (iv) the dimethyl cyclosiloxane.

Silicone copolymers according to this embodiment can be prepared using only the organosilicon precursor (i), while the silicone terpolymers require the presence of at least organosilicon precursors (i) and (ii). Silicone copolymers can also be prepared using organosilicon precursors (i) and (iv), if desired. When the short chain linear silicone endblocker (iii) is included in the reaction mixture, its presence results in the formation of trialkylsiloxy endblocked silicone copolymers and silicone terpolymers, rather than silanol endblocked silicone copolymers and silicone terpolymers, as would be the case in its absence.

A surfactant(s), a cosurfactant(s) and a polymerization inititator, are required for the reaction to proceed and for forming a microemulsion, and reference may be had to U.S. Application 09/227,858 for a detailed list of each of these components.

Generally, preferred nonionic surfactants are alcohol ethoxylate of the formula $R8\text{-}(OCH_2CH_2)_tOH$ in which R8 is a fatty hydrocarbon residue of 8-20 carbon atoms, and t has a value of 1-100. Representative anionic surfactants are sulfonic acids; salt derivatives of sulfonic acids; alkali metal sulfosuccinates; sulfonated glyceryl esters of fatty acids; salts of sulfonated monovalent alcohol esters; amides of amino sulfonic acids; sulfonated products of fatty acid nitriles; sulfonated aromatic hydrocarbons; condensation products of naphthalene sulfonic acids and formaldehyde; sodium octahydro anthracene sulfonates; alkali metal alkyl sulfates; ether sulfates having alkyl groups of at least eight carbon atoms; and alkylaryl sulfonates having one or more alkyl groups of at least eight carbon atoms. Some suitable cationic surfactants include compounds containing quaternary ammonium hydrophilic moieties in the molecule which are positively charged, such as quaternary ammonium salts represented by $R9R10R11R12N^+X^-$ where R9 to R12 are alkyl groups containing 1-30 carbon atoms, or alkyl groups derived from tallow, coconut oil, or soy; and X is halogen, i.e., chlorine or bromine.

The co-surfactant is generally a compound such as a monohydroxy alcohol, a diol or a triol. Some preferred co-surfactants include 1-butanol, 1-pentanol, 1-decanol, 1-hexadecanol, ethylene glycol, propylene glycol, trimethylene glycol and glycerol. The catalyst is a material capable of polymerizing siloxanes in the presence of water, including materials generally known as condensation polymerization catalysts capable of cleaving siloxane bonds. Representative condensation polymerization catalysts include strong acids such as substituted benzenesulfonic acids, aliphatic sulfonic acids, hydrochloric acid and sulfuric acid; and strong bases such as quaternary ammonium hydroxides, and metal hydroxides such as sodium hydroxide.

The following example illustrates the further embodiment of this invention in more detail. In this example, a cationic surfactant was used comprising dodecyltrimethyl ammonium bromide (DTAB) $CH_3(CH_2)_{11}N^+(CH_3)_3Br^-$. The co-surfactant was primary amyl alcohol, i.e., 1-pentanol $CH_3(CH_2)_4OH$. The polymerization initiator, i.e., the catalyst, was sodium hydroxide or hydrochloric acid.

Example 13 - Preparation of a Microemulsion

13.2 grams of the aminoalkylfunctional cocyclic siloxane and 61.6 grams of a solution containing 22 percent by weight of DTAB cationic surfactant were added to a glass vial equipped with a stirring bar and 17.2 grams of co-surfactant 1-pentanol were titrated into the vial dropwise, with mixing, until a thermodynamically stable, single phase, clear, pre-microemulsion, had formed. The contents of the vial were transferred to a glass reaction vessel, where polymerization of the organofunctional cocyclic siloxane was catalyzed by adding 1.28 grams of a 50 percent by weight aqueous sodium hydroxide catalyst solution. The temperature of the reaction vessel was adjusted to 50°C. The reaction in the vessel was allowed to proceed to completion, whereupon its contents were neutralized with glacial acetic acid. The OH endblocked silicone copolymer was recovered from the microemulsion by breaking the product using a salt. The silicone copolymer was isolated and analyzed by Gel Permeation Chromatography (GPC).

The conditions used in preparing the microemulsion, and its characteristics are summarized in Table 2. In Table 2, alpha ($\alpha$) is the weight percent of the siloxane oil ÷ the weight percent of the siloxane oil + the weight percent of water. Gamma ($\gamma$) is the weight percent of the cationic surfactant S1 + the weight percent of the co-surfactant S2 ÷ the weight percent of the siloxane oil + the weight percent of water + the weight percent of the cationic surfactant S1 + the weight percent of the co-surfactant S2. The data in Table 2 is based upon preparation of a composition having a total mass of ten grams.

The silicone copolymer was characterized and is shown in Table 2 by its polydispersity, i.e., $DP_w/DP_n$. Polydispersity can be expressed in terms of $DP_n$ and $DP_w$ rather than the number-average molecular weight $M_n$ and weight-average molecular weight $M_w$, and this terminology has been used in Table 2. DP, it is noted, is the degree of polymerization in the silicone copolymer, indicating the number of repeating units present in the polymer species. The silicone

copolymer in the single phase composition according to this embodiment of the invention most preferably have average droplet diameters of less than 50 nanometer (0.050 micron μm) to provide optical clarity. The criteria used to determine clarity, and the term Clear in Table 1, is whether text can be read with the naked eye through a two centimeter diameter bottle filled with the microemulsion.

TABLE 2

| EXAMPLE | S1 | S2 | α | γ | Particle Size, μm | Appearance |
|---|---|---|---|---|---|---|
| 13 | DTAB | $C_5H_{11}OH$ | 0.2 | 0.33 | 0.0102 | Clear |

TABLE 2

| Continued | | | | | |
|---|---|---|---|---|---|
| EXAMPLE | Catalyst | Reaction Temp. °C | $DP_n$ | $DP_w$ | Polydispersity |
| 13 | NaOH | 50 | 30.0 | 52.0 | 1.742 |

Example 14 - Preparation of a Microemulsion

0.73 gram of the carboxyalkyl functional cocyclic siloxane and 3.34 grams of a solution containing 22 percent by weight of DTAB cationic surfactant were added to a glass vial equipped with a stirring bar and 0.92 gram of co-surfactant 1-pentanol were titrated into the vial dropwise, with mixing, until a thermodynamically stable, clear, pre-microemulsion, had formed. Polymerization of the organofunctional cocyclic siloxane was catalyzed by adding 0.02 gram of a 35 percent by weight aqueous HCl catalyst solution. The temperature was adjusted to 70°C. The reaction was allowed to proceed to completion, whereupon the contents of the vial were neutralized with triethanolamine. The OH endblocked silicone copolymer was recovered from the microemulsion by breaking the product using a salt. The silicone copolymer was isolated and analyzed by Gel Permeation Chromatography (GPC).

The conditions used in preparing the microemulsion, and the characteristics of the silicone copolymer are summarized in Table 3. In Table 3, alpha (α) is the weight percent of the siloxane oil ÷ the weight percent of the siloxane oil + the weight percent of water. Gamma (γ) is the weight percent of the cationic surfactant S1 + the weight percent of the co-surfactant S2 ÷ the weight percent of the siloxane oil + the weight percent of water + the weight percent of the cationic surfactant S1 + the weight percent of the co-surfactant S2. The data in Table 1 is based upon preparation of a composition having a total mass of ten grams.

The silicone copolymer was characterized and is shown in Table 3 by its polydispersity, i.e., $DP_w/DP_n$. Polydispersity can be expressed in terms of $DP_n$ and $DP_w$ rather than the number-average molecular weight $M_n$ and weight-average molecular weight $M_w$, and this terminology has been used in Table 3. DP is the degree of polymerization in the silicone copolymer, indicating the number of repeating units present in the polymer species. The silicone copolymer in the composition according to this embodiment of the invention most preferably have average droplet diameters of less than 50 nanometers (0.050 micron μm) to provide optical clarity. The criteria used to determine clarity, and the term Clear in Table 1, is whether text can be read with the naked eye through a two centimeter diameter bottle filled with the microemulsion.

TABLE 3

| EXAMPLE | S1 | S2 | α | γ | Particle Size, μm | Appearance |
|---|---|---|---|---|---|---|
| 5 | DTAB | $C_5H_{11}OH$ | 0.2 | 0.33 | 0.0126 | Clear |

TABLE 3

| Continued | | | | | |
|---|---|---|---|---|---|
| EXAMPLE | Catalyst | Reaction Temp. °C | $DP_n$ | $DP_w$ | Polydispersity |
| 5 | HCl | 70 | 6.7 | 7.2 | 1.029 |

The compositions, emulsions and microemulsions, according to this invention have application in the personal care arena, especially in the care of hair, where conditioning is desirable. Thus, they can be used in hair shampoos, hair conditioners, hair sprays, mousses, permanents, depilatories and cuticle coats, to enhance gloss and provide conditioning benefits.

## Claims

**1.** A cocyclic siloxane having the formula

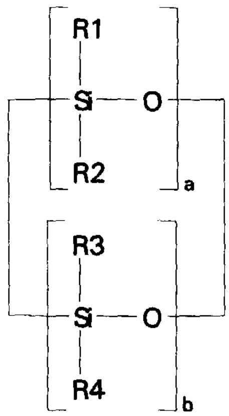

where R1 to R3 are each an alkyl group containing 1-6 carbon atoms; a and b are each a positive integer having a value of 1-10; and R4 is selected from

i) an aminoalkyl group having the formula

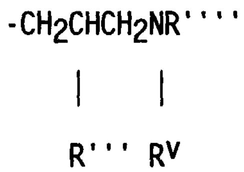

where R''' and R'''' are each hydrogen atoms or an alkyl group containing 1-4 carbon atoms. $R^V$ is a hydrogen atom or a group having the formula

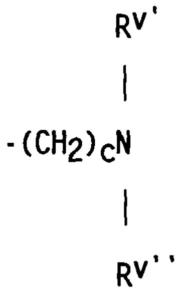

where c is a positive integer having a value of 2 or 3, and $R^{v'}$ and $R^{v''}$ are hydrogen atoms or an alkyl group containing 1-4 carbon atoms; and

ii) a carboxyalkyl or carboxyalkyl derivative group having the formula $-(CHR8)_nCOOR9$ where R8 is a hydrogen atom or an alkyl group containing 1-6 carbon atoms; R9 is a hydrogen atom, an alkyl group containing 1-6 carbon atoms or a trialkylsilyl group $-Si(R10)_3$ where R10 is an alkyl group containing 1-6 carbon atoms and n is a positive integer having a value of 3-20.

**2.** The cocyclic siloxane according to claim 1 in which R1 to R3 are each the methyl group.

**3.** The cocyclic siloxane according to any of claims 1 and 2 in which R4 is an aminoalkyl group selected from the group $-CH_2CH_2CH_2NH_2$, $-CH_2CH_2CH_2NHCH_2CH_2NH_2$ and $-CH_2CH(CH_3)CH_2NHCH_2CH_2NH_2$ or the carboxyalkyl group $-(CH_2)_{10}COOH$.

**4.** A hydrosilation process in which an ≡SiH containing reactant is contacted with a reactant containing unsaturation in the presence of a Group VIII transition metal catalyst, characterized by using, as the ≡SiH containing reactant, a cocyclic siloxane having the formula

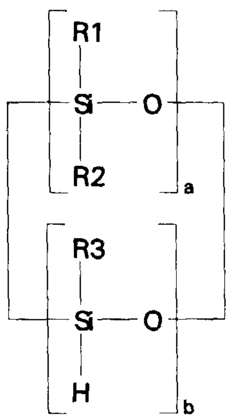

where R1 to R3 are each an alkyl group containing 1-6 carbon atoms, and a and b are each positive integers having a value of 1-10; and the reactant containing unsaturation is selected from the group

(i) an unsaturated amine having the formula

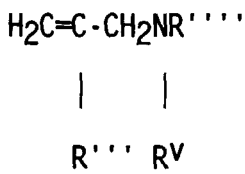

where R''' and R'''' are each hydrogen atoms or an alkyl group containing 1-4 carbon atoms, $R^V$ is a hydrogen

atom or a group having the formula

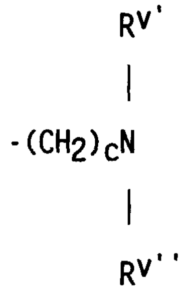

where c is a positive integer having a value of 2 or 3, and $R^{v'}$ and $R^{v''}$ are hydrogen atoms or an alkyl group containing 1-4 carbon atoms; and

(ii) an alkenoic acid or an alkenoic acid derivative having the formula $(H_2C)_m$=CR8$(CR8_2)_n$COOR9 where R8 is a hydrogen atom or an alkyl group containing 1-6 carbon atoms; R9 is a hydrogen atom, an alkyl group containing 1-6 carbon atoms, or a trialkylsilyl group -Si$(R10)_3$ where R10 is an alkyl group containing 1-6 carbon atoms; m is a positive integer having a value of 1-3; and n is a positive integer having a value of 1-20.

5. The process according to claim 4 in which the reactants are contacted in the presence of greater than 100 parts per million of the Group VIII transition metal catalyst.

6. A composition comprising a cocyclic siloxane according to any of claims 1-3.

7. A method of preparing a silicone copolymer or a silicone terpolymer comprising heating a mixture of (i) an organofunctional cocyclic siloxane according to any of claims 1-3; and optionally (ii) an alkylmethyl, dimethyl silicone cocyclic containing eight or more carbon atoms, in the presence of (iii) an catalyst, at a temperature and for a time sufficient to cause polymerization of (i) and optionally (ii) to the desired silicone copolymer and silicone terpolymer, respectively.

8. The method of claim 7 wherein in the formula for the organofunctional cocyclic siloxane R4 is the alkylamino group and the catalyst is alkaline.

9. The method of claim 8 in which the catalyst is an alkali-metal silanolate having the formula $R^a_w Si(OM)_{4-w}$ or an alkali metal siloxanolate having the formula $MO(R^a_2SiO)_nM$, in which $R^a$ represents an alkyl radical of 1-6 carbon atoms, an aryl radical, an alkenyl radical, or an alkylamino radical; w is 0-3; and n is 2-20.

10. The method of claim 7 wherein in the formula for the organofunctional cocyclic siloxane R4 is the carboxyalkyl or carboxyalkyl derivative group and the catalyst is acidic.

11. The method according to any of claims 7-10 in which the mixture further includes (iv) a short chain linear silicone endblocker.

12. The method according to any of claims 7-11 in which the alkylmethyl, dimethyl silicone cocyclic has a structure corresponding to the formula:

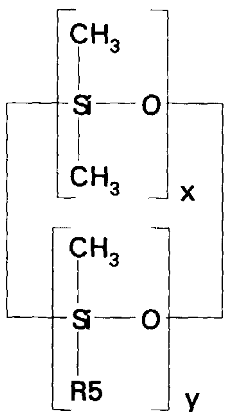

where x and y are integers having a value of 1 to 10: and R5 is a hydrocarbon group containing eight or more carbon atoms.

**13.** A silicone copolymer or a silicone terpolymer obtainable by the method according to any of claims 7-12.

**14.** A method of emulsion polymerization by

i) preparing a mixture comprising a cocyclic siloxane according to any of claims 1-3, a surfactant and water;
ii) optionally, subjecting this mixture to high shear; and
iii) polymerizing this mixture in presence of an catalyst to form higher molecular weight polysiloxanes in the emulsion.

**15.** A method of making a thermodynamically stable, clear, single phase, silicone oil-in-water microemulsion, comprising the steps of

(i) forming a two-phase mixture comprising water, the cocyclic siloxane according to any of claims 1-3, and a nonionic surfactant, a cationic surfactant, or an anionic surfactant;
(ii) adding to the two-phase mixture a co-surfactant selected from the group monohydroxy alcohols, diols and triols, until a thermodynamically stable, clear, single phase, pre-microemulsion containing the siloxane is formed;
(iii) adding a polymerization initiator to the thermodynamically stable, clear, single phase, pre-microemulsion;
(iv) heating the thermodynamically stable, clear, single phase, pre-microemulsion;
(v) agitating the heated, thermodynamically stable, clear, single phase, pre-microemulsion; and
(vi) allowing the siloxane to polymerize, until a thermodynamically stable, clear, single phase, microemulsion is formed containing a silicone polymer.

**16.** The method according to any of claims 14 and 15 in which the mixture includes another organosilicon precursor selected from the group consisting of

(i) an alkylmethyl, dimethyl silicone cocyclic containing eight or more carbon atoms having a structure corresponding to the formula:

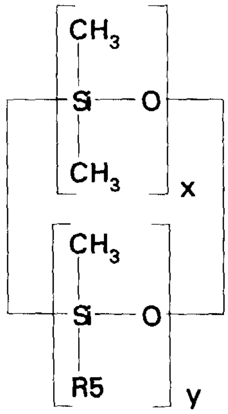

where x and y are integers having a value of 1 to 10; and R5 is a hydrocarbon group containing eight or more carbon atoms;

(ii) a cyclic alkyl siloxane having the formula:

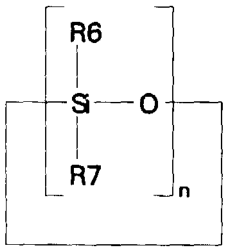

where n has a value of 3-6, and R6 and R7 each represent alkyl groups containing 1-6 carbon atoms; and

(iii) mixtures thereof.

**17.** An emulsion obtainable by the method of any of claims 14 and 16 provided claim 16 is depending from claim 14.

**18.** An microemulsion obtainable by the method of any of claims 15 and 16 provided claim 16 is depending from claim 15.

**19.** A personal care composition comprising an emulsion according to claim 17 or an microemulsion according to claim 18.